# FASCICULE DE BREVET EUROPEEN

(11) **EP 0 438 330 B1**
(45) Date de publication et mention de la délivrance du brevet: **25.05.1994**
(21) Numéro de dépôt: 91400041.9
(22) Date de dépôt: 10.01.1991
(51) Int. Cl.: B29C 37/00, B29C 45/42, B26B 29/02

(54) **Dispositif de protection d'articles à usage notamment alimentaire et dispositif de manutention de tels articles pour les conditionner dans des sachets de protection**
Schutzelement für Artikel, insbesondere für Essbestecke und Handhabungsvorrichtung solcher Artikel zum Verpacken in Schutzhüllen
Protection element for articles in particular for cutlery and device for placing them in protective packages

(30) Priorité: 18.01.1990 FR 9000961; 11.04.1990 FR 9004674
(43) Date de publication de la demande: 24.07.1991
(73) Titulaire: Vulliez, Henri, F-89360 Butteaux (FR)
(72) Inventeur: Vulliez, Henri, F-89360 Butteaux (FR)
(74) Mandataire: Beauchamps, Georges

(56) Documents cités:
- EP-A- 0 182 514
- EP-A- 0 218 101
- FR-A- 1 264 265
- FR-A- 2 254 419
- GB-A- 2 187 989
- US-A- 3 675 323
- US-A- 4 204 824
- US-A- 4 544 519
- US-A- 4 582 353
- US-A- 4 814 134
- KUNSTSTOFFE, vol. 73, no. 10, octobre 1983, pages 559-563, München, DE; G.R.LANGECKER: "Maschinen und Verarbeitung. Automatisierungen imSpritzgiessbetrieb"
- KUNSTSTOFFE, vol. 79, no. 2, février 1989, page 136, München, DE;"Automatisches Spritzgiessen und Verpacken von Bestecken"
- KUNSTSTOFFE, vol. 74, no. 9, septembre 1984, pages 489-490, München, DE; P.SPAMER et al.: "Flexibles Fertigungszentrum für das Spritzgiessen kleinerSerien"

## Description

La présente invention concerne un dispositif de protection d'articles à usage notamment alimentaire, tels que fourchettes, couteaux, cuillères, pointes à hors d'oeuvre, qui ne servent qu'une seule fois.

Les couverts sont actuellement livrés en l'état sans protection contre les coupures ou piqûres qu'ils peuvent occasionner et surtout sont sans garantie d'un non usage antérieur de ceux-ci. Ceci est également valable pour les couverts sous sachets puisque rien ne garantit que ceux-ci n'ont pas fait l'objet d'un usage antérieur une fois sortis de leurs sachets respectifs.

Le brevet FR-A-1 264 265 propose de munir d'une gaine de protection le tranchant d'instruments de coupe, en particulier d'instruments chirurgicaux, pour garantir la stérilité et l'intégrité de ceux-ci.

Mais on revient alors au problème précédemment cité pour les couverts sous sachets à savoir que rien ne garantit qu'ils n'ont pas fait l'objet d'un usage antérieur une fois sortis de leurs gaines respectives.

La présente invention a pour but d'éliminer les inconvénients ci-dessus en proposant ainsi un dispositif de protection d'articles à usage alimentaire permettant non seulement une protection contre les piqûres ou les coupures qu'ils peuvent occasionner mais également de garantir un seul et unique usage de chacun d'eux.

Pour cela, le dispositif de protection d'articles pointus ou tranchants, à usage alimentaire, tels que fourchettes ou couteaux, est caractérisé en ce qu'il comprend un organe de protection relié directement à la partie pointue ou tranchante à protéger de l'article par au moins un point frangible de façon à pouvoir séparer l'organe de protection de l'article lors de l'utilisation de ce dernier.

Dans le cas où l'article est une pointe, l'organe de protection est en forme de boule reliée à la partie pointue de la pointe par un étranglement formant le point frangible précité.

Dans le cas où l'article est une fourchette, l'organe de protection est en forme de bande reliée aux extrémités des dents de la fourchette par des points d'étranglement formant points frangibles.

Dans le cas où l'article est un couteau, l'organe de protection est en forme de bande reliée au tranchant du couteau par un ou plusieurs points d'étranglement formant chacun point frangible.

Chaque article et l'organe de protection qui lui est associé sont réalisés en une seule pièce lors du moulage par injection ou compression.

Les articles et leurs organes de protection associés sont en une matière plastique.

Chaque article est conditionné dans un sachet de protection soudé à l'organe de protection par soudage thermique, par ultrasons ou par haute fréquence.

L'invention concerne également un dispositif de manutention d'articles moulés à usage alimentaire, tels que fourchettes ou couteaux, pour les conditionner dans des sachets de protection.

De tels articles sont actuellement obtenus par moulage d'une matière plastique, telle que polypropylène, polystyrène ou polycarbonate, injectée dans des empreintes correspondantes d'un moule métallique du type à canaux chauds et à plan de joint des deux parties du moule vertical. Ainsi, après chaque ouverture des deux parties du moule, les articles moulés sont éjectés simultanément de leurs empreintes de moulage et tombent dans un conteneur de réception d'où ils sont ensuite manuellement récupérés pour être conditionnés manuellement ou automatiquement dans des sachets de protection.

Cependant, en tombant en vrac dans le conteneur de réception, les articles, lorsqu'ils sont constitués notamment par des fourchettes, s'imbriquent souvent les uns dans les autres par leurs dents de sorte que l'opérateur doit séparer ces articles en risquant de casser des dents de certaines d'entre elles, ce qui se traduit par des articles de rebut. De plus, le désenchevêtrement des articles retarde leur mise en sachet.

Le brevet US-A-4 814 134 décrit un procédé et un dispositif pour emballer automatiquement des articles tels que des cuillères, des fourchettes ou des couteaux de façon ordonnée dans une boîte. Cependant ce dispositif ne s'applique pas à des articles chacun muni d'une pièce de protection de la partie active de celui-ci et reliée à cette partie de façon séparable par au moins un point frangible avec la pièce de protection comportant au moins un moyen permettant à des moyens de préhension, par exemple un robot, de saisir l'article.

La présente invention a pour but d'éliminer les inconvénients ci-dessus en proposant un dispositif de manutention d'articles moulés à usage alimentaire, tels que fourchettes ou couteaux pour les conditionner dans des sachets de protection, caractérisé en ce qu'il comprend des moyens de préhension aptes à saisir séparément les articles moulés avant ou lors de leur éjection du moule et à les acheminer vers une machine d'emballage automatique des articles dans des sachets de protection et en ce que chaque article moulé comprend une pièce de protection de la partie active de l'article et reliée à celle-ci de façon séparable par au moins un point frangible, la pièce de protection comportant au moins un moyen permettant aux moyens de préhension précités de saisir l'article.

Avantageusement, les moyens de préhension précités comprennent au moins un robot à bras et poignet de préhension simultanée des articles moulés précités.

Selon un mode de réalisation, le poignet de robot précité comprend des pinces saisissant les moyens permettant la saisie des articles moulés avant l'éjection de ces derniers et constitués chacun par une protubérance moulée de la pièce de protection.

Selon un second mode de réalisation, le poignet de robot précité comporte des tiges de préhension parallèles disposées en regard respectivement d'ouvertures des pièces de protection formant les moyens permettant la saisie des articles de façon que les articles soient enfilés sur leurs tiges respectives par leurs pièces de protection lors de l'éjection des articles du moule.

De préférence, chaque pièce de protection comporte deux ouvertures permettant l'empilage d'un article respectivement sur deux tiges de préhension.

Avantageusement, les moyens de préhension comprennent deux robots identiques à bras et poignets de préhension respectivement de deux groupes d'articles moulés successivement, l'un des robots acheminant un groupe d'articles moulés saisi vers la machine d'emballage pendant que l'autre robot saisit l'autre groupe d'articles moulés.

Chaque robot précité est adapté, par pivotement, à pénétrer entre les deux parties du moule à plan de joint vertical pour saisir les articles moulés et à se dégager d'entre ces deux parties pour acheminer les articles vers la machine d'emballage.

Les moyens de préhension précités acheminent les articles moulés saisis à un poste de stockage où ils sont de nouveau saisis par d'autres moyens de préhension, de préférence constitués par un robot à bras et poignet de préhension, pour être amenés à la machine d'emballage où ils sont conditionnés, à l'unité ou en nombre, dans les sachets de protection.

Avantageusement, chaque sachet de protection est soudé, thermiquement, par ultrasons ou par haute fréquence, à la pièce de protection d'un article.

Chaque pièce de protection est constituée par une plaquette ou une bande raccordée à la partie active de l'article moulé par des rétreints.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :
La figure 1 représente une fourchette munie d'un dispositif de protection conforme à l'invention ;
La figure 2 représente un couteau muni également d'un dispositif de protection conforme à l'invention ;
La figure 3 représente une pointe à hors d'oeuvre munie d'un dispositif de protection conforme à l'invention ;
La figure 4 représente très schématiquement une installation pour le moulage d'articles et leur manutention et emballage automatiques dans des sachets de protection ;
La figure 5 est une vue en perspective montrant des moyens de préhension associés à un moule ouvert pour la saisie d'articles moulés, seules les empreintes du moule étant représentées ;
La figure 6 représente en vue agrandie une fourchette à laquelle est raccordée une plaque de protection suivant un premier mode de réalisation ;
La figure 7 est une vue identique à celle de la figure 6 mais représentant un second mode de réalisation de la plaquette de protection ;
La figure 8 est une vue en coupe suivant la ligne VIII-VIII de la figure 5 ;
La figure 9 est une vue en coupe suivant la ligne IX-IX de la figure 8 ;
La figure 10 est une vue en perspective partielle d'une machine d'emballage ;
La figure 11 représente une autre mode de réalisation de moyens de préhension d'articles moulés ; et
La figure 12 représente un couteau comme article moulé pouvant être saisi par les moyens de préhension conformes à l'invention.

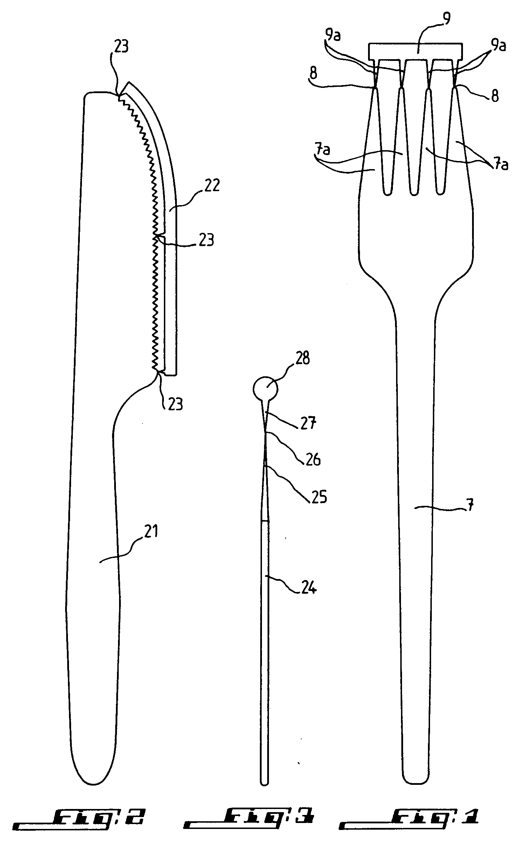

La figure 1 représente une fourchette 7 faite en une matière plastique moulée, telle que par exemple du polystyrène, du polypropylène ou du polycarbonate dont les dents 7a sont reliées par leurs extrémités à un organe de protection 9 en forme de bande ou de plaquette en une matière plastique identique à celle constituant la fourchette 7. La plaquette 9 comporte, situées d'un même côté, des dents 9a, dont les extrémités sont solidarisées aux extrémités des dents 7a de la fourchette 7. Ainsi, la plaquette 9 est reliée aux dents 7a de la fourchette 7 par des points d'étranglement formant points frangibles de façon que cette plaquette puisse être séparée par un utilisateur en cassant la liaison entre les dents 9a et les dents 7a. Dans ces conditions, la plaquette 9 empêche non seulement tout risque de piqûre d'un utilisateur par les dents 7a de la fourchette 7 mais garantie un usage antérieur de la fourchette puisque la plaquette 9 sera désolidarisée de la fourchette 7.

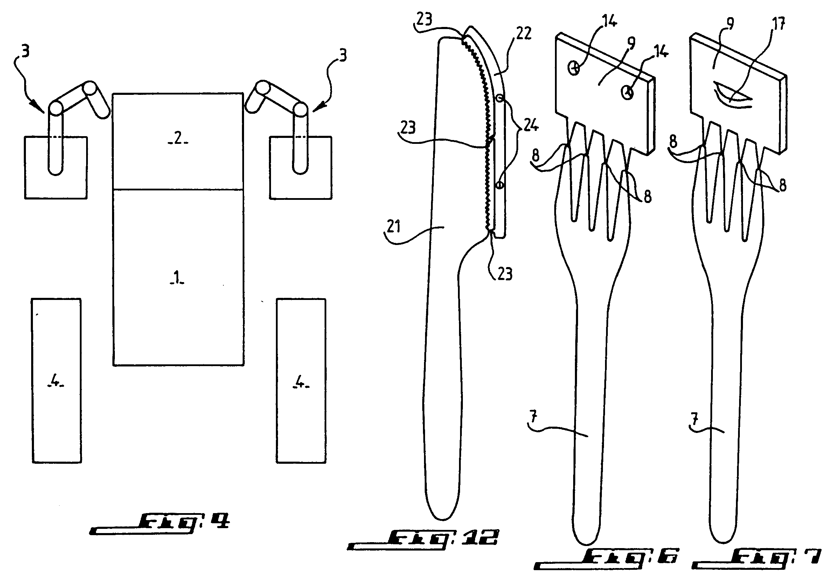

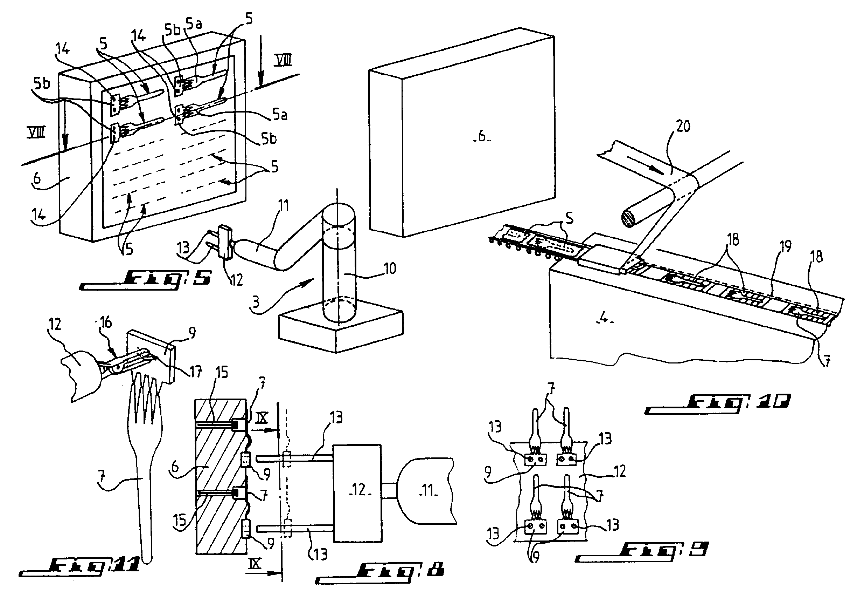

Les mêmes résultats ci-dessus sont obtenus pour le couteau et la pointe représentés respectivement aux figures 2 et 3.

En figure 2, le couteau 21 a son tranchant protégé par une bande 22 épousant la forme du tranchant et reliée à celui-ci par deux ou plusieurs liaisons frangibles 23 en forme de dents formant points d'étranglement. Le couteau 21 et la bande 22 sont en une même matière plastique.

La pointe 24 représentée en figure 3 a son extrémité pointue 25 reliée par un point d'étranglement 26 à l'extrémité pointue d'une partie effilée 27 solidaire d'une boule de protection 28. La pointe 24 et la boule de protection 28 sont en une même matière plastique.

Les articles sus-mentionnés sont réalisés d'une seule pièce dans un même moule comme cela sera expliqué ultérieurement.

Le ou les points de jonction entre l'article et son organe de protection associé sont donc étranglés pour faciliter leur rupture lors de l'utilisation de l'article. Le non usage de cet article est donc garanti avant toute utilisation par un consommateur et la rupture d'au moins l'un des points de jonction informe l'utilisateur que l'article a pu déjà être utilisé et qu'il lui sera plus prudent de ne pas l'utiliser pour des raisons d'hygiène.

La figure 4 représente à titre d'exemple une installation permettant le moulage d'articles tels que des couverts de table, de les saisir de leur moule et de les conditionner automatiquement dans des sachets de protection. Cette installation permet de réaliser ces opérations à une cadence très élevée et comprend une machine 1 de plastification et d'injection de la matière plastique constituant les articles, telle que polystyrène, polypropylène, ou polycarbonate, dans un moule métallique 2 à empreintes, qui correspondent à la forme des articles à mouler; deux robots identiques 3 disposés de part et d'autre de l'ensemble machine 1 et moule 2 pour saisir à tour de rôle les articles moulés du moule 2 et les acheminer vers respectivement deux machines 4 d'emballage automatique des articles dans des sachets de protection, par exemple en cellophane.

L'installation de la figure 4 va être décrite plus en détail à l'aide des figures 5 à 12 en se référant pour la simplicité uniquement à l'utilisation d'un robot 3 saisissant des articles moulés et les acheminant vers la machine d'emballage 4.

La machine de plastification-injection 1 est largement connue en soi et n'a pas à être décrite en détail sinon qu'elle permet l'injection de la matière fondue dans le moule 2 qui est du type à plan de joint vertical. Le moule 2 est représenté en position ouverte montrant les différentes empreintes horizontales 5 de l'une 6 des deux parties du moule 2 et correspondant à la forme des articles à mouler constitués dans le cas présent par des fourchettes de table. A titre d'exemple, vingt empreintes 5 peuvent être prévues disposées en deux colonnes de dix empreintes alignées. Chaque empreinte 5 comporte une partie d'empreinte 5a correspondant à une fourchette et une autre partie d'empreinte 5b dans le cas présent rectangulaire et communiquant avec l'empreinte 5a par des canaux de rétrécissement de la partie 6 du moule 2. Chaque empreinte 5 permet ainsi de mouler une fourchette 7, dont les dents ont leurs extrémités reliées respectivement par des rétreints frangibles 8 à une plaquette de protection 9 manuellement séparable de la fourchette 7 en cassant les rétreints 8. La présence de la plaquette de protection 9 répond à des questions d'hygiène en garantissant l'utilisation pour la première fois de la fourchette par un consommateur.

Le robot 3 est schématiquement représenté comme comportant une colonne verticale pivotante 10 portant un bras 11 à poignet de préhension 12 pouvant s'articuler dans toutes directions dans l'espace comme cela est déjà connu en soi.

Selon un premier mode de réalisation, le poignet 12 du robot 3 comprend des tiges de préhension parallèles 13 destinées à être positionnées entre les deux parties 6 du moule ouvert 2 en regard respectivement d'ouvertures circulaires 14 des plaquettes de protection 9 et obtenues lors du moulage des fourchettes 7. A cette position, les tiges 13 sont perpendiculaires à la partie 6 du moule 2 portant les fourchettes moulées. De préférence, chaque plaquette de protection 9 comporte deux ouvertures 14 alignées verticalement lorsque chaque fourchette 7 est dans son empreinte et susceptibles de s'engager respectivement sur deux tiges de préhension 13 du poignet 12. Pour la simplicité, seul un jeu de deux tiges superposées 13 a été représenté pour saisir respectivement deux fourchettes, étant bien entendu qu'en réalité on prévoit autant de paires de tiges 13 qu'il y a de paires d'ouvertures 14.

La façon dont sont saisies les différentes fourchettes moulées s'effectue comme suit.

Une fois les fourchettes 7 et leurs plaquettes de protection associées 9 moulées, l'ouverture du moule 2 est commandée et le robot 3 pivote autour de son axe vertical de façon à amener son poignet 12 entre les deux parties 6 du moule 2. Le robot 3 positionne le poignet 12 afin que les tiges de préhension 13 soient précisément en regard et très proches des ouvertures 14 de plaquettes 9. Lorsque les tiges de préhension 13 sont correctement positionnées, les éjecteurs 15 du moule 2 sont actionnés simultanément de façon à éjecter de leurs empreintes 5 les fourchettes 7 qui sont alors enfilées simultanément respectivement sur leurs tiges de préhension 13. Les fourchettes 7 sont ainsi saisies séparément par les tiges 13 et maintenues sur celles-ci horizontalement. Le robot 3 dégage ensuite le poignet 12 d'entre les deux parties 6 du moule 2 pour acheminer les fourchettes saisies vers la machine d'emballage 4.

Selon un second mode de réalisation représenté aux figures 7 et 11, le poignet 12 du robot 3 comprend un certain nombre de pinces 16, dont une seule est représentée pour la simplicité, pouvant saisir simultanément les fourchettes 7. Pour cela, chaque fourchette 7 comporte, obtenue par moulage, une saillie ou protubérance 17 formée sur la face externe de la plaquette de protection 9. Chaque protubérance 17 est ainsi saisie par une pince 16 et peut être soit verticale, soit horizontale suivant que la pince de préhension 16 correspondante a ses deux branches dans un plan horizontal ou vertical. Pour la saisie des fourchettes moulées, le robot 3 positionne son poignet 12 de façon que les pinces 16 enserrent respectivement les protubérances 17 avant que soit effectuée l'éjection des fourchettes de leurs empreintes 5. Une fois ces fourchettes 7 saisies, le robot 3 les achemine vers la machine d'emballage 4.

Il est possible de n'utiliser qu'un seul robot 3 pour saisir les fourchettes moulées lorsque la cadence de production imposée est relativement faible mais dans le cas d'une cadence de production élevée de ces fourchettes, il est préférable d'utiliser les deux robots 3. Dans ce dernier cas, l'un des robots 3 acheminera un groupe de fourchettes saisi vers la machine d'emballage 4 pendant que l'autre robot effectuera une opération de saisie de l'autre groupe de fourchettes moulées. Pour des raisons de cadence de fabrication, il est également souhaitable que les fourchettes saisies ne soient pas directement amenées à la machine d'emballage 4 mais acheminées à un poste de stockage proche de la machine 4 d'où elles sont récupérées par un troisième robot de préhension les posant ensuite en files respectivement sur des palettes alignées de transport 18 fixes les unes par rapport aux autres et entraînées longitudinalement par exemple par une chaîne ou une courroie de transmission 19 mue par un moteur électrique. En passant sous une bande de papier cellophane 20, chaque fourchette 7 est automatiquement enveloppée par la bande de papier cellophane pour former un sachet de protection S. La machine 4 et plus particulièrement les moyens permettant de conditionner les fourchettes dans des sachets de protection 5 sont largement connus et n'ont pas à être détaillés davantage. Une fois que les fourchettes sont conditionnées, elles passent sous un appareil adapté pour souder, par exemple thermiquement, par ultra-sons ou par haute fréquence, une portion du papier cellophane du sachet sur la plaquette de protection 9. L'appareil de soudage est également connu en soi et peut faire partie intégrante de la machine 4. Le soudage du sachet de protection à la plaquette 9 oblige le consommateur à tout d'abord séparer la plaquette 9 de la fourchette 7 avant de sortir cette dernière de son sachet de sorte que la plaquette 9 tombe à l'intérieur du sachet. Ceci évite une pollution de la nature par les plaquettes détachées 9 et surtout d'encombrer les tables de restaurant et de services hospitaliers.

Le dispositif conforme à l'invention a été décrit en référence à des fourchettes comme articles moulés mais il est bien entendu qu'il s'applique également à des couteaux 21, dont le tranchant de chacun est protégé par une bande 22 de forme conjuguée au tranchant et raccordée à celui-ci par deux ou plusieurs liaisons frangibles 23. Chaque bande 22 comporterait soit deux ouvertures 24 dans le cas présent alignées horizontalement lorsque le couteau 21 est à l'horizontal dans son moule 2 et coopérant respectivement avec deux tiges parallèles 13 du poignet 12 du robot 3 pour la saisie du couteau, soit une protubérance (non représentée) saisie par une pince correspondante 16 du poignet 12 comme déjà expliqué précédemment. De plus, les articles à saisir ont été représentés comme occupant une position horizontale dans leur moule de fabrication 2 mais il est bien évident qu'ils peuvent occuper une position verticale. Enfin, chaque plaquette de protection 9 peut avoir toute autre forme qu'une forme rectangulaire.

## Revendications

1. Dispositif de protection d'articles moulés à usage alimentaire, tels que fourchettes ou couteaux, caractérisé en ce qu'il comprend un organe de protection (9;22;28) relié directement à la partie pointue ou tranchante à protéger de l'article par au moins un point frangible (8;23;26) de façon à pouvoir séparer l'organe de protection (9;22;28) de l'article lors de l'utilisation de ce dernier.

2. Dispositif selon la revendication 1, caractérisé en ce que, dans le cas où l'article est une pointe, l'organe de protection (28) est en forme de boule reliée à la partie pointue de la pointe par un étranglement (26) formant le point frangible précité.

3. Dispositif selon la revendication 1, caractérisé en ce que, dans la cas où l'article est une fourchette, l'organe de protection (9) est en forme de bande reliée aux extrémités des dents de la fourchette par des points d'étranglement (8) formant points frangibles.

4. Dispositif selon la revendication 1, caractérisé en ce que, dans le cas où l'article est un couteau, l'organe de protection (22) est en forme de bande reliée au tranchant du couteau par un ou plusieurs points d'étranglement (23) formant chacun un point frangible.

5. Dispositif selon l'une des revendications précédentes, caractérisé en ce que chaque article précité et l'organe de protection associé sont réalisés en une seule pièce lors du moulage par injection ou par compression.

6. Dispositif selon l'une des revendications précédentes, caractérisé en ce que les articles précités et leurs organes de protection associés (9,22) sont en une même matière plastique.

7. Dispositif selon la revendication 3 ou 4, caractérisé en ce que l'article précité est conditionné dans un sachet de protection soudé à l'organe de protection (9 ; 22) précité par soudage thermique par ultrasons ou par haute fréquence.

8. Dispositif de manutention d'articles moulés à usage alimentaire, tels que fourchettes ou couteaux, pour les conditionner dans des sachets de protection, caractérisé en ce que :
- il comprend des moyens de préhension (3, 12, 13, 16) aptes à saisir séparément les articles moulés (7 ; 21) avant ou lors de leur éjection du moule (2) et à les acheminer vers une machine d'emballage automatique (4) des articles (7 ; 21) dans les sachets de protection (S),
- chaque article moulé (7 ; 21) comprend une pièce de protection (9 ; 22) de la partie active de l'article (7 ; 21) reliée à celle-ci de façon séparable par au moins un point frangible (8 ; 23),
- la pièce de protection (9 ; 22) comporte au moins un moyen (14 ; 24 ; 17) permettant aux moyens de préhension précités de saisir l'article.

9. Dispositif selon la revendication 8, caractérisé en ce que les moyens de préhension précités comprennent au moins un robot (3) à bras (11) et poignet (12) de préhension simultanée des articles moulés précités.

10. Dispositif selon la revendication 8 ou 9, caractérisé en ce que le poignet de robot (12) précité comprend des pinces (16) saisissant les moyens (17) permettant la saisie des articles moulés avant l'éjection de ces derniers et constitués chacun par une protubérance (17) de la pièce de protection (9 ; 22).

11. Dispositif selon la revendication 8 ou 9, caractérisé en ce que le poignet de robot (12) précité comporte des tiges de préhension parallèles (13) disposées en regard respectivement d'ouvertures (14 ; 24) des pièces de protection (9 ; 22) formant les moyens permettant la saisie des articles moulés de façon que ces articles soient enfilés sur leurs tiges respectives (13) par leurs pièces de protection (9 ; 22) lors de l'éjection des articles du moule (2).

12. Dispositif selon la revendication 11, caractérisé en ce que chaque pièce de protection (9) comporte deux ouvertures (14) permettant l'empilage d'un article (7; 21) respectivement sur deux tiges de préhension (13).

13. Dispositif selon l'une des revendications 8 à 12, caractérisé en ce que les moyens de préhension précités comprennent deux robots identiques (3) à bras (11) et poignet (12) de préhension respectivement de deux groupes d'articles moulés successivement, l'un des robots acheminant un groupe d'articles moulés saisi vers la machine d'emballage (4) pendant que l'autre robot saisit l'autre groupe d'articles moulés.

14. Dispositif selon l'une des revendications 8 à 13, caractérisé en ce que chaque robot (3) précité est adapté, par pivotement, à pénétrer entre les deux parties (6) du moule (2) à plan joint vertical pour saisir les articles moulés (7 ; 21) et à se dégager d'entre ces deux parties (6) pour acheminer les articles vers la machine d'emballage (4).

15. Dispositif selon l'une des revendications 8 à 14, caractérisé en ce que les moyens de préhension précités acheminent les articles moulés saisis à un poste de stockage où ils sont de nouveau saisis par d'autres moyens de préhension, de préférence constitués par un robot à bras et poignet de préhension, pour être amenés à la machine d'emballage (4) où ils sont conditionnés automatiquement, à l'unité ou en nombre, dans les sachets de protection (S).

16. Dispositif selon l'une des revendications 8 à 15, caractérisé en ce que chaque sachet de protection précité est soudé à la pièce de protection (9; 22) d'un article emballé, par soudure thermique, par ultrasons ou par haute fréquence.

17. Dispositif selon l'une des revendications 8 à 16, caractérisé en ce que chaque pièce de protection (9 ; 22) est formée par une plaquette (9) ou une bande raccordée à la partie active de l'article moulé (7 ; 21) par des rétreints (8 ; 23).

## Patentansprüche

1. Vorrichtung zum Schutz von geformten Artikeln für Nahrungsverwendungszwecke, wie Gabeln und Messern, dadurch gekennzeichnet, dass sie ein mit dem zu schützenden spitzen oder schneidenden Teil des Artikels durch wenigstens eine brechbare Stelle (8; 23; 26) unmittelbar verbundenes Schutzglied (9; 22; 28) aufweist, um das Schutzglied (9; 22; 28) von dem Artikel bei der Verwendung dieses letzteren abtrennen zu können.

2. Vorrichtung nach Anspruch 1, dadurch gekennzeichnet, dass in dem Fall, wo der Artikel eine Spitze ist, das Schutzglied (28) die Gestalt einer mit dem spitzen Teil der Spitze durch eine die vorgenannte brechbare Stelle bildende Einschnürung (26) verbundenen Kugel hat.

3. Vorrichtung nach Anspruch 1, dadurch gekennzeichnet, dass in dem Fall, wo der Artikel eine Gabel ist, das Schutzglied (9) die Gestalt einer mit den Enden der Zähne der Gabel durch brechbare Stellen bildende Einschnürungsstellen (8) verbundenen Streifenleiste hat.

4. Vorrichtung nach Anspruch 1, dadurch gekennzeichnet, dass in dem Fall, wo der Artikel ein Messer ist, das Schutzglied (22) die Gestalt einer mit der Schneide des Messers durch eine oder mehrere jeweils eine brechbare Stelle bildende Einschnürungsstellen (23) verbundenen Streifenleiste hat.

5. Vorrichtung nach einem der vorangehenden Ansprüche, dadurch gekennzeichnet, dass jeder vorgenannte Artikel und das zugeordnete Schutzglied in einem Stück während dem Spritzguss- oder Druckformverfahren hergestellt werden.

6. Vorrichtung nach einem der vorangehenden Ansprüche, dadurch gekennzeichnet, dass die vorgenannten Artikel und deren zugeordneten Schutzglieder (9, 22) aus einem selben Kunststoff sind.

7. Vorrichtung nach Anspruch 3 oder 4, dadurch gekennzeichnet, dass der vorgenannte Artikel in einem durch Heiss- , durch Ultraschall- oder durch Hochfrequenzschweissen an dem vorgenannten Schutzglied (9; 22) angeschweissten Schutzbeutel verpackt ist.

8. Vorrichtung zur Handhabung von geformten Artikeln für Nahrungsverwendungszwecke, wie Gabeln oder Messern, um sie in Schutzbeutel zu verpacken, dadurch gekennzeichnet, dass :
- sie Greifermittel (3, 12, 13, 16) aufweist, die fähig sind, die geformten Artikel (7; 21) vor oder während deren Auswurf aus der Giessform (2) getrennt zu ergreifen und sie zu einer Maschine (4) hin zum automatischen Verpacken der Artikel (7; 21) in den Schutzbeuteln (S) zu befördern;
- jeder geformte Artikel (7; 21) ein Schutzstück (9; 22) zum Schutz des aktiven Teiles des Artikels (7; 21) umfasst, das mit demselben in trennbarer Weise durch wenigstens eine brechbare Stelle (8; 23) verbunden ist;
- das Schutzstück (9; 22) wenigstens ein Mittel (14; 24; 17), das den vorgenannten Greifermitteln gestattet, den Artikel zu ergreifen, umfasst.

9. Vorrichtung nach Anspruch 8, dadurch gekennzeichnet, dass die vorgenannten Greifermittel wenigstens einen Roboter (3) mit Arm (11) und Handgelenk (12) zum gleichzeitigen Ergreifen der vorgenannten geformten Artikel aufweisen.

10. Vorrichtung nach Anspruch 8 oder 9, dadurch gekennzeichnet, dass das vorgenannte Handgelenk (12) des Roboters die das Ergreifen der geformten Artikel vor dem Auswurf dieser letzteren gestattenden und jeweils durch einen Höcker (17) des Schutzstückes (9; 22) gebildeten Mittel (17) ergreifende Zangen (16) aufweist.

11. Vorrichtung nach Anspruch 8 oder 9, dadurch gekennzeichnet, dass das vorgenannte Handgelenk (12) des Roboters gegenüber die das Ergreifen der geformten Artikel gestattenden Mittel bildenden Offnungen (14; 24) der Schutzstücke (9; 22) angeordnete parallele Greifstäbe umfasst, damit diese Artikel auf deren jeweiligen Stäbe (13) durch deren Schutzstücke (9; 22) beim Auswurf der Artikel aus der Giessform (2) aufgeschoben werden.

12. Vorrichtung nach Anspruch 11, dadurch gekennzeichnet, dass jedes Schutzglied (9) zwei das Stapeln eines Artikels (7; 21) jeweils an zwei Greifstäben (13) gestattende Offnungen (14) aufweist.

13. Vorrichtung nach einem der Ansprüche 8 bis 12, dadurch gekennzeichnet, dass die vorgenannten Greifermittel zwei gleichartige Roboter (3) mit Arm (11) und Handgelenk (12) zum aufeinanderfolgenden Ergreifen jeweils von zwei Gruppen von geformten Artikeln umfassen, wobei der eine Roboter eine ergriffene Gruppe von geformten Artikeln zur Verpackungsmaschine (4) hin befördert, während der andere Roboter die andere Gruppe von geformten Artikeln ergreift.

14. Vorrichtung nach einem der Ansprüche 8 bis 13, dadurch gekennzeichnet, dass jeder vorgenannte Roboter (3) angepasst ist, um durch Schwenken zwischen den beiden Teilen (6) der Giessform (2) mit senkrechter Teilungsebene einzudringen, um die geformten Artikel (7; 21) zu ergreifen und sich aus zwischen diesen beiden Teilen (6) heraus zu bewegen, um die Artikel zur Verpackungsmaschine (4) hin zu befördern.

15. Vorrichtung nach einem der Ansprüche 8 bis 14, dadurch gekennzeichnet, dass die vorgennanten Greifermittel die ergriffenen geformten Artikel zu einer Lagerungsstation befördern, wo sie erneut durch andere vorzugsweise durch einen Roboter mit Greifarm und -handgelenk gebildete Greifermittel erneut ergriffen werden, um zur Verpackungsmaschine (4) gebracht zu werden, wo sie automatisch einzeln oder im Anzahl in den Schutzbeuteln (S) verpackt werden.

16. Vorrichtung nach einem der Ansprüche 8 bis 15, dadurch gekennzeichnet, dass jeder vorgenannte Schutzbeutel an dem Schutzstück (9; 22) eines verpackten Artikels durch Heiss-, durch Ultraschall-oder durch Hochfrequenzschweissung angeschweisst ist.

17. Vorrichtung nach einem der Ansprüche 8 bis 16, dadurch gekennzeichnet, dass jedes Schutzstück (9; 22) durch ein bzw. eine mit dem aktiven Teil des geformten Artikels (7; 21) durch Einschnürungen (8; 23) verbundenes bzw. verbundene Plättchen (9) oder Streifenleiste gebildet wird.

## Claims

1. Device for the protection of molded articles for food utilization purposes such as forks or knives, characterized in that it comprises a protection member (9 ; 22 ; 28) connected directly to the sharp-pointed or cutting portion to be protected of the article by at least one frangible point (8 ; 23 ; 26) so as to be able to separate the protective member (9 ; 22 ; 28) from the article during the use of the latter.

2. Device according to claim 1, characterized in that in the case where the article is a tip point, the protection member (28) is in the shape of a ball connected to the sharp-pointed portion of the tip point by a narrowing (26) forming the aforesaid frangible point.

3. Device according to claim 1, characterized in that in the case where the article is a fork, the protection member (9) is in the shape of a strip connected to the ends of the teeth of the fork by narrowing points (8) forming frangible points.

4. Device according to claim 1, characterized in that in the case where the article is a knife, the protection member (22) is in the shape of a strip connected to the cutting edge of the knife by one or several narrowing points (23) forming each one a frangible point.

5. Device according to one of the foregoing claims, characterized in that each aforesaid article and the associated protection member are made in one single piece during the injection or compression molding.

6. Device according to one of the foregoing claims, characterized in that the aforesaid articles and their associated protection members (9, 22) are made from a same plastics material.

7. Device according to claim 3 or 4, characterized in that the aforesaid article is conditioned in a protection bag welded to the aforesaid protection member (9 ; 22) by ultrasound or by high frequency heat welding.

8. Device for the handling of molded articles for food utilization purposes such as forks or knives for conditioning them into protection bags, characterized in that :
- it comprises gripping means (3, 12, 13, 16) adapted to separately grip the molded articles (7 ; 21) before or during their ejection from the mold (2) and to convey them towards a machine (4) for the automatic packing of the articles (7 ; 21) into the protection bags (S),
- each molded article (7 ; 21) comprises a part (9 ; 22) for the protection of the active portion of the article (7 ; 21) connected thereto in a separable manner by a least one frangible point (8 ; 23),
- the protection part (9 ; 22) comprises at least one means (14 ; 24 ; 17) allowing the aforesaid gripping means to grip the article.

9. Device according to claim 8, characterized in that the aforesaid gripping means comprise at least one robot (3) with an arm (11) and a wrist (12) for the simultaneous gripping of the aforesaid molded articles.

10. Device according to claim 8 or 9, characterized in that the aforesaid robot wrist (12) comprises tongs (16) gripping the means (17) permitting the gripping of the molded articles before the ejection of the latter and constituted each one by a protrusion (17) of the protection part (9 ; 22).

11. Device according to claim 8 or 9, characterized in that the aforesaid robot wrist (12) comprises Parallel gripping rods (13) disposed in front of openings (14 ; 24), respectively, of the protection parts (9 ; 22) forming the means allowing the gripping of the molded articles so that these articles be threaded onto their respective rods (13) by their protection parts (9 ; 22) during the ejection of the articles from the mold (2).

12. Device according to claim 11, characterized in that each protection part (9) comprises two openings (14) Permitting the stacking of an article (7 ; 21) onto two gripping rods (13), respectively.

13. Device according to one of claims 8 to 12, characterized in that the aforesaid gripping means comprise two identical robots (3) with an arm (11) and a wrist (12) for the gripping of two groups, respectively, of molded articles successively, one of the robots conveying one gripped group of molded articles towards the packing machine (4) whereas the other robot grips the other group of molded articles.

14. Device according to one of claims 8 to 13, characterized in that each aforesaid robot (3) is adapted through pivoting to penetrate between both parts (6) of the mold (2) with a vertical joint face plane to grip the molded articles (7 ; 21) and to disengage itself from between these two parts (6) for conveying the articles towards the Packing machine (4).

15. Device according to one of claims 8 to 14, characterized in that the aforesaid gripping means convey the gripped molded articles to a storage station where they are again gripped by other gripping means preferably constituted by a robot with an arm and a gripping wrist to be brought to the packing machine (4) where they are automatically conditioned as a unit or in a number into the protection bags (S).

16. Device according to one of claims 8 to 15, characterized in that each aforesaid protection bag is welded to the protection part (9 ; 22) of a packed article by ultrasound or high frequency heat welding.

17. Device according to one of claims 8 to 16, characterized in that each protection part (9 ; 22) is formed of a plate (9) or of a strip connected to the operative portion of the molded article (7 ; 21) by narrowings (8 ; 23).
